# EUROPÄISCHE PATENTSCHRIFT

(11) **EP 0 452 258 B1**
(45) Veröffentlichungstag und Bekanntmachung des Hinweises auf die Patenterteilung: **26.06.1996**
(21) Anmeldenummer: 91810227.8
(22) Anmeldetag: 27.03.1991
(51) Int. Cl.: C09B 47/06, C09B 67/04, C09D 11/02

(54) **Herstellung von beta-Kupferphthalocyanin in Pigmentform**
Preparation of beta copper phthalocyanine in pigmentary form
Procédé de préparation de bêta-cuprophthalocyanine en forme de pigment

(30) Priorität: 07.04.1990 GB 9007924
(43) Veröffentlichungstag der Anmeldung: 16.10.1991
(73) Patentinhaber: CIBA-GEIGY AG, CH-4002 Basel (CH)
(72) Erfinder: Lambie, Ian Andrew, Neilston, Glasgow, Scotland (GB); McFarlane, Michael David, Dr., Houston Renfrewshire PA6 7AH (GB); Langley, Robert, Glasgow G77 5AS, Scotland (GB)

(56) Entgegenhaltungen:
- DE-A- 2 017 040
- DE-A- 2 439 983
- DE-A- 2 745 893
- US-A- 3 188 318
- US-A- 3 598 625

## Beschreibung

Die vorliegende Erfindung betrifft ein Verfahren zur Herstellung von β-Kupferphthalocyanin in Pigmentform.

Zahlreiche Verfahren zur Herstellung von rohem Kupferphthalocyanin sind bekannt. Sie gehen gewöhnlich von Phthalsäureanhydrid oder von Phthalodinitril aus. Ein übliches Verfahren zur Herstellung von rohem Kupferphthalocyanin ist das sogenannte Back-Verfahren, bei welchem Phthalsäureanhydrid, Harnstoff, Kupferchlorid und ein Katalysator im Ofen auf Temperaturen zwischen 170 und 210°C erhitzt werden.

Ein weiteres herkömmliches Verfahren ist das sogenannte Lösemittel-Verfahren, bei dem die Reaktanden in einem organischen Lösungsmittel suspendiert und bei etwa 200°C umgesetzt werden.

Beide Verfahrensvarianten weisen Vor- und Nachteile auf und jeder Pigmenthersteller wählt die für seine Bedürfnisse zweckmässigste Variante aus.

Das US-Patent 3 188 318 beschreibt ein verbessertes Back-Verfahren zur Herstellung von Phthalocyanin-Verbindungen durch Umsetzung von Harnstoff mit einer Metallverbindung und einem Orthoarylen-Derivat. Eine bevorzugte Metallverbindung ist ein Kupfersalz und ein bevorzugtes Orthoarylen-Derivat ist Phthalsäureanhydrid. Die Reaktanden werden im wesentlichen kontinuierlich und möglichst gleichmässig in einem Reaktionskessel in annähernd sauerstofffreier Atmosphäre eingeleitet, wobei der Reaktionskessel bereits vorgebildetes, trockenes, granulares Phthalocyanin in einer Menge, die mindestens einer zweistündigen Einleitung entspricht, enthält. Das Reaktionsprodukt wird proportional zur eingeleiteten Menge aus dem Reaktionskessel entfernt.

Wie bereits erwähnt erhält man bei diesem Verfahren ein rohes Produkt (nicht in Pigmentform). Dieses muss demnach, bevor es als Färbemittel, z.B. in Drucktinten oder Kunststoffen, eingesetzt werden kann, in die Pigmentform übergeführt werden.

Wie für die Synthese von rohem Kupferphthalocyanin sind auch für die Ueberführung des letzteren in die Pigmentform zahlreiche Methoden bekannt, wie z.B. die Säurebehandlung zur Bildung von 100%iger α-Form, die Salzmahlung zur progessiven Ueberführung in die α-Form, die Salzmahlung mit Kristallisierhilfsmitteln, wie z.B. N,N-Diethylanilin, zur Bildung der β-Modifikation, die Salzknetung mit anorganischem Salz und polarem Kristallisierhilfsmittel zur Erzeugung der β-Form oder, wie in DE-A-2 745 893 beschrieben, die Verrührung des zuvor trockengemahlenen Rohpigments mit einem Tensid, gegebenenfalls in Gegenwart eines Amins..

Es ist nun gefunden worden, dass durch Kombination einer spezifischen Herstellungsmethode für rohes Kupferphthalocyanin mit einem bestimmten Verfahren zur Ueberführung des so erhaltenen Kupferphthalocyanins in die Pigmentform, Produkte mit überraschend besseren Pigmenteigenschaften, insbesondere Farbstärke, Glanz und Grünton, hergestellt werden können.

Die vorliegende Erfindung betrifft demnach ein Verfahren zur Herstellung von 13-Kupferphthalocyanin in Pigmentform durch
a) im wesentlichen kontinuierliches und gleichmässiges Einleiten von Phthalsäureanhydrid oder Phthalimid, Harnstoff, einer Kupferverbindung und einem Katalysator in einen trockenes, granulares, vorgebildetes Kupferphthalocyanin enthaltenden Reaktionskessel und Entfernen des gebildeten rohen Phthalocyanins aus dem Reaktionskessel und
b) Ueberführen des unter a) erhaltenen rohen Kupferphthalocyanins in die Pigmentform durch Mahlung in trockenem Zustand oder in wässrigem Medium, Vermischen des Mahlgutes mit einer wässrigen Emulsion bestehend aus
   i) einem flüssigen C₆-C₂₀-Amin, das in Wasser oder Alkali unlöslich, aber in Säure löslich ist und
   ii) einem oberflächenaktiven Mittel, mit welchem das flüssige Amin emulgiert werden kann,
Ansäuern des Gemisches, um das Amin zu lösen und Isolieren des erhaltenen Kupferphthalocyanins in Pigmentform aus dem Gemisch.

Die erste Stufe a) des erfindungsgemässen Verfahrens stellt eine Umwandlung des herkömmlichen Back-Verfahrens dar.

Es ist vorteilhaft Harnstoff und Kupferverbindung im Verhältnis zum Phthalsäureanhydrid oder zum Phthalimid im Ueberschuss einzusetzen. Zur Reaktionsbeschleunigung empfiehlt es sich katalitische Mengen, z.B. 0,1 bis 1 Gew.%, bezogen auf die gesamte Reaktionsmischung, Ammoniummolybdat zuzugeben.

Das trockene, granulare, vorgebildete Kupferphthalocyanin, das vor dem Einleiten der Reaktanden im Reaktionskessel enthalten ist, wird auf hohe Temperaturen, bevorzugt zwischen 150 und 300°C, insbesondere zwischen 160 und 200°C und vorzugsweise unter städigem Rühren während der Stufe a) gehalten. Das Rühren wird zweckmässig durch Rotation des Reaktionskessels bewerkstelligt. Es empfiehlt sich demnach zur Durchführung der Stufe a) einen rotierenden Reaktionskessel zu verwenden, wobei eine Rotationsgeschwindigkeit von 5 bis 10 U/Min. bevorzugt ist.

Als Kupferverbindung kann jegliches Kupfersalz verwendet werden, Kupfer-(I)-chlorid ist aber bevorzugt.

Es ist wichtig die Stufe a) des erfindungsgemässen Verfahrens durch Koordination der eingeleiteten Mengen an Reaktanden und der ausgetragenen Menge an erhaltenem rohem Kupferphthalocyanin unter Kontrolle zu halten. Im kontinuierlichen Prozess ist es erforderlich die stündliche Menge an eingeleitetem und ausgetragenem Material aufeinander abzustimmen, um das gewünschte Gleichgewicht zwischen Ausgangsmaterialien und Fertigprodukt im Reaktionskessel aufrechtzuerhalten.

Die Menge an frisch eingeleiteten Reaktanden muss unter Kontrolle gehalten werden, damit ein Zusammenbacken der gerührten Reaktionsmasse, welche eine Einbusse am Pigment der gewünschten Partikelgrösse zur Folge hätte, vermieden wird.

Das Verhältnis zwischen der gesamten Ausgangsproduktemenge und der Menge an vorgebildetem Kupferphthalocyanin im Reaktionskessel während der Reaktionsdauer beträgt vorzugsweise 0, 1 bis 20 Gew.%, insbesondere 1 bis 10 Gew. %, bezogen auf die gesamte Menge an vorgebildetem Kupferphthalocyanin.

Um die maximale Ausbeute an gewünschtem Kupferphthalocyanin zu erreichen und die Brandgefahr auf ein Minimum zu reduzieren ist es zweckmässig die Atmosphäre im Reaktionskessel im wesentlichen, z.B. durch Stickstoffeinleitung, sauerstofffrei zu halten.

Nach Beendigung der Stufe a) und vor der Durchführung der Stufe b) des erfindungsgemässen Verfahrens wird das erhaltene rohe Kupferphthalocyanin bevorzugt, z.B. zur Beseitigung von Nebenprodukten, gereinigt. Dies geschieht zweckmässig durch Behandlung mit einer verdünnten Mineralsäure, anschliessendem Filtrieren und Waschen und gegebenenfalls Trocknen des erhaltenen Kupferphthalocyanins.

Wird die Mahlung in trockenem Zustand durchgeführt, so eignen sich Kugel- oder Schwingmühlen dazu. Die Trockenmahlung kann auch in völliger Abwesenheit eines Mahlhilfsmittels durchgeführt werden. Die Gegenwart eines Additivs, sei es als Mahlhilfsmittel, sei es zur Förderung der nachfolgenden Aminemulsion-Behandlung oder zur Verbesserung der Pigmenteigenschaften des Endproduktes, ist aber bevorzugt. Additive werden zweckmässig in einer Menge von 5 bis 15 Gew.%, bezogen auf das zu mahlende Pigment, eingesetzt. Beispiele von geeigneten Additiven sind Natriumformiat, Phthalimid, Phthalsäureanhydrid, hydriertes Kolophonium oder Glycerolmonooleat.

Wird die Mahlung in wässrigem Medium durchgeführt, dann bevorzugt in einer Perlmühle, wobei die Rohpigmentaufschlämmung vorzugsweise zuvor mit Hilfe eines Schnellrührers zubereitet wird.

Die wässrige Mahlung des Rohpigments kann beispielsweise in Gegenwart einer Aminemulsion durchgeführt werden. Man kann aber auch einer gewöhnlichen wässrigen Mahlung eine Mahlung in einer wässrigen Aminemulsion anschliessen.

Unabhängig davon, ob die Mahlung in trockenem Zustand oder wässerig erfolgt, ist das Ergebnis einerseits die Zerkleinerung der Pigmentpartikeln und andererseits eine progressive Umwandlung von der β- in die α-Modifikation. Es ist wünschenswert, das der Mahlprozess beendigt wird, wenn die Umwandlung in die α-Modifikation 20 bis 85 %, vorzugsweise 50 bis 75 % erreicht hat. Die α-Modifikation wird jedoch nicht erhalten, wenn die wässrige Mahlung in Gegenwart der Aminemulsion erfolgt oder wenn eine nachfolgende Mahlung in wässriger Aminemulsion stattfindet.

Zur Vervollständigung des Mahlprozesses wird das gemahlene Produkt mit der obenerwähnten aus einem flüssigen C₆-C₂₀-Amin und einem oberflächenaktiven Mittel bestehenden Emulsion vermischt.

Das flüssige Amin kann beispielsweise ein aliphatisches oder aromatisches Mono-, Di- oder Triamin sein. Beispiele von geeigneten aliphatischen Aminen sind C₇-C₁₆-Alkylmonoamine und Diamine der Formel RHN-CH₂CH₂CH₂-NH₂, worin R einen aliphatischen C₁₂-C₁₆-Rest, wie z.B. einen Talg- oder einen Cocos-Rest (Lauryl) bedeutet. Geeignete Arylamine sind z.B. Anilin, sowie C₁-C₄-Alkyl-substituierte Aniline, wie o-Toluidin, N,N-Diethylanilin und N,N-Dimethylanilin. Die Menge an eingesetztem Amin kann in weiten Grenzen, bevorzugt aber zwischen 2 und 50 und insbesondere zwischen 5 und 30 Gew.%, bezogen auf das Pigment, variieren.

Als oberflächenaktives Mittel kann jedes Tensid eingesetzt werden, das imstande ist das flüssige Amin zu emulgieren und keine nachteilige Wirkung auf die Eigenschaften des Endproduktes hat. Es kann sich dabei um ein anionaktives, kationaktives oder nichtionisches Tensid handeln.

Beispiele für nichtionische oberflächenaktive Mittel sind Alkylphenol-ethylenoxidkondensate, wie z.B. Nonylphenol-ethylenoxidkondensate enthaltend 7- 10 Mol Ethylenoxid auf 1 Mol Kondensat. Besonders bevorzugt werden anionische oberflächenaktive Mittel, wie z.B. Alkalimetallsalze von Alkylbenzolsulfonaten, insbesondere Natrium- und Kaliumsalze von Dodecylbenzolsulfonat oder Xylolsulfonat, ungesättigte Tallölharze, Kolophonium und Kolophoniumderivate.

Die Menge an oberflächenaktivem Mittel variiert zweckmässig zwischen 1 und 15 Gew. %, bezogen auf das Pigment.

Das Vermischen des Mahlgutes mit der Amin/Tensid-Emulsion erfolgt vorteilhaft bei erhöhter Temperatur z.B. zwischen 20 und 100°C, bevorzugt zwischen 40 und 70°C, und wird solange weitergeführt, bis das Pigmentmaterial eine durchschnittliche Partikelgrösse unter 1 µm aufweist und im wesentlichen in der β-Modifikation vorliegt.

Nachdem das Pigmentmaterial die erwünschte submikronische Partikelgrösse erreicht hat, wird die Mischung angesäuert, bevorzugt durch Zugabe von Mineralsäure bis zu einem pH unter 1,5. Dadurch geht das Amin als Aminsalz in Lösung und, falls ein Alkalimetallresinat als oberflächenaktives Mittel verwendet wird, fällt dieses Resinat als freies Harz aus. Wird ein Alkalimetallresinat als oberflächenaktives Mittel verwendet, dann ist es von Vorteil ein die Lösungsmittel/Tensid-Emulsion brechendes Salz vor dem Ansäuern zuzugeben. Beispiele solcher Salze sind Bariumchlorid, Zinkchlorid und insbesondere Calciumchlorid. Die Bildung eines solchen Metallresinates vor dem Ansäuern kann zu einem pigmentären Endprodukt mit verbesserter Dispergierbarkeit führen.

Nach dem Ansäuren kann die Pigmentaufschlämmung filtriert werden, der Rückstand säure- und chloridionenfrei gewaschen und dann getrocknet werden.

Das nach dem erfindungsgemässen Verfahren hergestellte Pigment zeichnet sich durch besonders gute Farbstärke, Glanz und den erwünschten Grünton insbesondere in Oeldruckfarben aus. Das so erhaltene Pigment eignet sich aber ebenfalls für die Anwendung in Tiefdruckfarben, Anstrichmitteln und Kunststoffen. Zur Anwendung in den drei letztgenannten Systemen können die Eigenschaften der erfindungsgemäss hergestellten Pigmente noch verbessert werden, wenn man ein Additiv, z.B. ein Kupferphthalocyaninderivat zusetzt. Beisiele solcher Additive sind Dimethylaminomethyl-kupferphthalocyanin oder Phthalimidomethyl-kupferphthalocyanin, wobei die Zahl der Substituenten des Kupferphthalocyaninmoleküls zwischen 1 und 4, bevorzugt 2 und 3 variiert, sowie sulfoniertes Kupferphthalocyanin oder ein Aminsalz von sulfoniertem Kupferphthalocyanin.

Die folgenden Beispiele erläutern die Erfindung.

### Beispiel 1:

Ein Gemisch aus 83,4 g Phthalsäureanhydrid, 125,2 g Harnstoff, 16,3 g Kupfer-(I)-chlorid und 0,5 g Ammoniummolybdat wird in einen cylindrischen Reaktionskessel enthaltend 6000 g trockenes, granulares, vorgebildetes rohes Kupferphthalocyanin zugegeben. Die Zugabe erfolgt in Mengen von 106 g pro Stunde. Die Temperatur der Reaktionsmischung wird auf 175°C gehalten und der Reaktionskessel wird mit einer Geschwindigkeit von 6 U/Min. rotiert. Durch Stickstoffeinleitung wird im wesentlichen sauerstofffrei gearbeitet.

Das Rohprodukt wird als trockenes, granulares Material ausgetragen, durch Rühren in 10%ige wässrige Salzsäure bei 95°C gereinigt, abfiltriert, gewaschen und getrocknet.

92 g des obenerwähnten trockenen und gereinigten Kupferphthalocyanins werden in einer Kugelmühle mit 8 g Natriumformiat vermahlen, bis die Kristallmodifikationsumwandlung einen α-Gehalt von 50-75 % erreicht hat.

225 g auf 50°C erwärmtes Wasser, 22,5 g 50%ige Kalilauge, 10 g hydriertes Kolophonium und 18,6 g N,N'-Diethylanilin werden mit einem Schnellrührer zu einer Emulsion gerührt.

100 g des wie oben beschriebenen vermahlenen Kupferphthalocyanins und 300 g auf 50°C erwärmtes Wasser werden der Emulsion zugegeben. Die erhaltene Mischung wird 2 Stunden im Schnellrührer mit 3000 U/Min gerührt. Danach wird eine Lösung aus 5 g Calciumchlorid in 75 g Wasser zugegeben und die Aufschlämmung wird weitere 30 Minuten mit 3000 U/Min. gerührt. Schliesslich werden 55 g 36%ige Salzsäure zugegeben, die angesäuerte Pigmentaufschlämmung wird filtriert, der β-Kupferphthalocyaninpigment-Filterkuchen wird mit Wasser säure- und chloridionenfrei gewaschen und bei 80°C getrocknet.

60 g des so erhaltenen Pigments werden mit 240 g eines typischen schnellabbindenden Oeldruckfarbenfirnisses mittels eines Mastermix®-Rührers mit 1000 U/Min. bei 60°C vorgemischt.

100 g dieses Gemisches werden bei 23°C in einer Bühler-SDY-200®-Dreiwalzenmühle gemahlen.

Die erste Dispersion wird bei 10 Bar durchgezogen. Die zweite Dispersion wird bei 10 Bar durchgezogen.

Die Auswertung der Eigenschaften erfolgt durch Reduktion der Druckfarbe des ersten Durchlaufs (20 % Pigment) auf 15 % Pigmentgehalt mit dem obengenannten Firnis und Herstellung von Drucken mit verschiedenem Filmgewicht mittels einer Prüfbau®-Druckmaschine. Die Druckdichte jedes Druckes (bei verschiedenem Filmgewicht) sowie der Glanz bei gleichem Filmgewicht werden instrumentell mit Erichsen Mini Glossmaster® bei 60°C gemessen.

Das wie oben beschrieben im Druckfarbensystem eingearbeitete Pigment zeichnet sich durch seine Farbstärke, seinen Glanz und seinen grünen Farbton aus.

### Beispiel 2:

Ein Gemisch aus 83,4 g Phthalsäureanhydrid, 125,2 g Harnstoff, 16,3 g Kupfer-(I)-chlorid und 0,5 g Ammoniummolybdat wird in einen cylindrischen Reaktionskessel enthaltend 6000 g trockenes, granulares, vorgebildetes rohes Kupferphthalocyanin zugegeben. Die Zugabe erfolgt in Mengen von 106 g pro Stunde. Die Temperatur der Reaktionsmischung wird auf 175°C gehalten und der Reaktionskessel wird mit einer Geschwindigkeit von 6 U/Min. rotiert. Durch Stickstoffeinleitung wird im wesentlichen sauerstofffrei gearbeitet.

Das Rohprodukt wird als trockenes, granulares Material ausgetragen, durch Rühren in 10%ige wässrige Salzsäure bei 95°C gereinigt, abfiltriert, gewaschen und als Filterkuchen isoliert.

221 g des 167 g Kupferphthalocyanin enthaltenden Filterkuchens werden mittels eines Schnellrührers in 588 g Wasser dispergiert. Die erhaltene Dispersion wird durch eine 0,3-Liter-Perlmühle enthaltend 425 g Glasperlen (∅ 0,7-1 mm) geführt, bei einer Rührgeschwindigkeit der Rührer in der Perlmühle von 3000 U/Min. Die Dispersion wird so oft durch die Mühle laufen gelassen, bis die Kristallmodifikationsumwandlung einen α-Gehalt von 50-75 % erreicht hat.

175 g auf 50°C erwärmtes Wasser, 20,4 g 50 %-ige Kalilauge, 9 g hydriertes Kolophonium und 16,9 g N,N-Diethylanilin werden mit einem Schnellrührer zu einer Emulsion gerührt.

401,1 g der obenerwähnten perlgemahlenen Dispersion enthaltend 82,8 g Kupferphthalocyanin werden der Emulsion zugegeben. Die erhaltene Mischung wird eine Stunde im Schnellrührer mit 6000 U/min. gerührt. Schliesslich werden 49 g 36%ige Salzsäure zugegeben, die angesäuerte Pigmentaufschlämmung wird filtriert, der β-Kupferphthalocyaninpigment-Filterkuchen wird mit Wasser säure- und chloridionenfrei gewaschen und bei 80°C getrocknet.

20 g des getrockneten Produktes werden von Hand mit einem Spatel mit 80 g eines typischen schnellabbindenden Oeldruckfarbenfirnisses vermischt, dann wird das Ganze auf zwei Walzen einer Bühler SDY-200®-Dreiwalzenmühle bei 10 Bar Druck dispergiert und danach durch die Mühle gezogen.

Die erste Dispersion wird bei 10 Bar durchgezogen. Die zweite Dispersion wird bei 10 Bar durchgezogen.

Die Auswertung der Eigenschaften erfolgt nach derselben Methode wie in Beispiel 1 beschrieben.

Das wie oben beschrieben im Druckfarbensystem eingearbeitete Pigment zeichnet sich durch seine Farbstärke, seinen Glanz und seinen grünen Farbton aus.

### Beispiel 3:

Ein Gemisch aus 83,4 g Phthalsäureanhydrid, 125,2 g Harnstoff, 16,3 g Kupfer-(I)-chlorid und 0,5 g Ammoniummolybdat wird in einen cylindrischen Reaktionskessel enthaltend 6000 g trockenes, granulares, vorgebildetes rohes Kupferphthalocyanin zugegeben. Die Zugabe erfolgt in Mengen von 106 g pro Stunde. Die Temperatur der Reaktionsmischung wird auf 175°C gehalten und der Reaktionskessel wird mit einer Geschwindigkeit von 6 U/Min. rotiert. Durch Stickstoffeinleitung wird im wesentlichen sauerstofffrei gearbeitet.

Das Rohprodukt wird als trockenes, granulares Material ausgetragen, durch Rühren in 10%ige wässrige Salzsäure bei 95°C gereinigt, abfiltriert, gewaschen und getrocknet

105 g des obenerwähnten trockenen und gereinigten Kupferphthalocyanins werden in einer Kugelmühle vermahlen, bis die Kristallmodifikationsumwandlung einen α-Gehalt von 50-75 % erreicht hat.

225 g auf 50°C erwärmtes Wasser, 22,5 g 50%ige Kalilauge, 10 g hydriertes Kolophonium und 18,6 g N,N'-Diethylanilin werden mit einem Schnellrührer zu einer Emulsion gerührt.

100 g des wie oben beschrieben vermahlenen Kupferphthalocyanins und 300 g auf 50°C erwärmtes Wasser werden der Emulsion zugegeben. Die erhaltene Mischung wird 2 Stunden im Schnellrührer mit 3000 U/Min. gerührt. Danach wird eine Lösung aus 5 g Calciumchlorid in 75 g Wasser zugegeben und die Aufschlämmung wird weitere 30 Minuten mit 3000 U/Min. gerührt. Schliesslich werden 55 g 36%ige Salzsäure zugegeben, die angesäuerte Pigmentaufschlämmung wird filtriert, der 5-Kupferphthalocyaninpigment-Filterkuchen wird mit Wasser säure- und chloridionenfrei gewaschen und bei 80°C getrocknet.

22,5 g des so erhaltenen Pigments werden mit 127,5 g eines typischen schnellbindenden Oeldruckfarbenfirnisses mittels eines Mastermix®-Rührers mit 1000 U/Min. bei 60°C vorgemischt. Dann werden 200 g Glasperlen (∅ 1 mm) zugegeben und die Mischung wird weitere 15 Minuten bei 80°C mit 2600 U/Min. vermahlen.

Die Auswertung der Eigenschaften erfolgt durch Herstellung von Volltondrucken mit verschiedenem Filmgewicht mittels einer Prüfbau®-Druckmaschine. Die Druckdichte jedes Druckes (bei verschiedenem Filmgewicht) sowie der Glanz bei gleichem Filmgewicht werden instrumentell mit Erichsen Mini Glossmaster® bei 60°C gemessen.

Das Produkt zeichnet sich durch seine Farbstärke, seinen Glanz und seinen grünen Farbton aus.

### Beispiel 4:

Ein Gemisch aus 83,4 g Phthalsäureanhydrid, 125,2 g Harnstoff, 16,3 g Kupfer-(I)-chlorid und 0,5 g Ammoniummolybdat wird in einen cylindrischen Reaktionskessel enthaltend 6000 g trockenes, granulares, vorgebildetes rohes Kupferphthalocyanin zugegeben. Die Zugabe erfolgt in Mengen von 106 g pro Stunde. Die Temperatur der Reaktionsmischung wird auf 175°C gehalten und der Reaktionskessel wird mit einer Geschwindigkeit von 6 U/Min. rotiert. Durch Stickstoffeinleitung wird im wesentlichen sauerstofffrei gearbeitet.

Das Rohprodukt wird als trockenes, granulares Material ausgetragen, durch Rühren in 10%ige wässrige Salzsäure bei 95°C gereinigt, abfiltriert, gewaschen und getrocknet.

105 g des obenerwähnten trockenen und gereinigten Kupferphthalocyanins werden in einer Kugelmühle vermahlen, bis die Kristallmodifikationsumwandlung einen α-Gehalt von 50-75 % erreicht hat.

200 g auf 50°C erwärmtes Wasser, 1,66 g Nonylphenol-ethylenoxid-kondensat (10 Mol Ethylenoxid) und 10,3 g des Diamins der Formel R-NH-(CH₂)₃-NH₂, worin R einen Cocos-Rest (Lauryl) bedeutet, werden mit einem Schnellrührer zu einer Emulsion gerührt.

87,1 g des wie oben beschrieben vermahlenen Kupferphthalocyanins und 250 g auf 50°C erwärmtes Wasser werden der Emulsion zugegeben. Die erhaltene Mischung wird 90 Minuten im Schnellrührer mit 3000 U/Min. gerührt. Danach werden 29,5 g 36%ige Salzsäure zugegeben, die angesäuerte Pigmentaufschlämmung wird filtriert, der β-Kupferphthalocyaninpigment-Filterkuchen wird mit Wasser säure- und chloridionenfrei gewaschen und bei 70°C getrocknet.

12 g des so erhaltenen Pigments werden mit 48 g einer 50%igen Lösung eines Phenolharzes in Toluol und 40 g Toluol in einem 500 ml Topf vermischt. Danach werden 200 g Steatitkugeln (∅ 10 mm) zugegeben und die Mischung wird während 16 Stunden dispergiert.

Die so erhaltene Druckfarbe zeichnet sich durch Farbstärke, Glanz und grünen Farbton aus.

### Beispiel 5:

Ein Gemisch aus 83,4 g Phthalsäureanhydrid, 125,2 g Harnstoff, 16,3 g Kupfer-(I)-chlorid und 0,5 g Ammoniummolybdat wird in einen cylindrischen Reaktionskessel enthaltend 6000 g trockenes, granulares, vorgebildetes rohes Kupferphthalocyanin zugegeben. Die Zugabe erfolgt in Mengen von 106 g pro Stunde. Die Temperatur der Reaktionsmischung wird auf 175°C gehalten und der Reaktionskessel wird mit einer Geschwindigkeit von 6 U/Min. rotiert. Durch Stickstoffeinleitung wird im wesentlichen sauerstofffrei gearbeitet.

Das Rohprodukt wird als trockenes, granulares Material ausgetragen, durch Rühren in 10%ige wässrige Salzsäure bei 95°C gereinigt, abfiltriert, gewaschen und getrocknet

93,2 g des obenerwähnten trockenen und gereinigten Kupferphthalocyanins werden in einer Kugelmühle mit 6,8 g Natriumformiat vermahlen, bis die Kristallmodifikationsumwandlung einen α-Gehalt von 50-60 % erreicht hat.

200 g auf 50°C erwärmtes Wasser, 25 g N,N-Diethylanilin und 4,1 g Dodecylbenzolsulfonsäure werden in einem Schnellrührer zu einer Emulsion gerührt.

93,4 g des wie oben beschrieben vermahlenen Kupferphthalocyanins und 270 g auf 55°C erwärmtes Wasser werden der Emulsion zugegeben. Die erhaltene Mischung wird 2 Stunden im Schnellrührer mit 3000 U/Min. gerührt. Danach werden 29,5 g 36 %ige Salzsäure zugegeben, die angesäuerte Pigmentaufschlämmung wird filtriert, der β-Kupferphthalocyaninpigment-Filterkuchen wird mit Wasser säure- und chloridionenfrei gewaschen und bei 70°C getrocknet. Das trockene Produkt wird nach üblichen Methoden in PVC eingearbeitet, wo es sich durch seine Farbstärke und seinen grünen Farbton auszeichnet.

### Beispiel 6:

Ein Gemisch aus 83,4 g Phthalsäureanhydrid, 125,2 g Harnstoff, 16,3 g Kupfer-(I)-chlorid und 0,5 g Ammoniummolybdat wird in einen cylindrischen Reaktionskessel enthaltend 6000 g trockenes, granulares, vorgebildetes rohes Kupferphthalocyanin zugegeben. Die Zugabe erfolgt in Mengen von 106 g pro Stunde. Die Temperatur der Reaktionsmischung wird auf 175°C gehalten und der Reaktionskessel wird mit einer Geschwindigkeit von 6 U/Min. rotiert. Durch Stickstoffeinleitung wird im wesentlichen sauerstofffrei gearbeitet.

Das Rohprodukt wird als trockenes, granulares Material ausgetragen, durch Rühren in 10%ige wässrige Salzsäure bei 95°C gereinigt, abfiltriert, gewaschen und getrocknet.

102 g des obenerwähnten trockenen und gereinigten Kupferphthalocyanins werden in einer Kugelmühle mit 4,8 g Phthalimid vermahlen, bis die Kristallmodifikationsumwandlung einen α-Gehalt von 50-75 % erreicht hat.

250 g auf 70°C erwärmtes Wasser, 13,5 g hydriertes Kolophonium, 30,3 g 50%ige Kalilauge und 7,4 g eines aliphatischen Amins der Formel RNH₂, worin R den Cocos-Rest (Lauryl) bedeutet, werden in einem Schnellrührer zu einer Emulsion gerührt.

91,3 g des wie oben beschrieben vermahlenen Kupferphthalocyanins und 270 g auf 70°C erwärmtes Wasser werden der Emulsion zugegeben. Die erhaltene Mischung wird 2 Stunden im Schnellrührer mit 3000 U/Min. gerührt. Danach wird eine Lösung aus 7,4 g Calciumchlorid in 100 g 70°C warmem Wasser zugegeben und die Aufschlämmung wird weitere 30 Minuten mit 3000 U/min. gerührt. Schliesslich werden 64,9 g 36%ige Salzsäure zugegeben, die angesäuerte Pigmentaufschlämmung wird filtriert, der β-Kupferphthalocyaninpigment-Filterkuchen wird mit Wasser säure- und chloridionenfrei gewaschen und bei 80°C getrocknet.

Das erhaltene trockene Pigment wird in einem Alkyd/Melamin-Einbrennlacksystem eingearbeitet, wo es sich durch seine Farbstärke, seinen Glanz und seinen grünen Farbton auszeichnet

### Beispiel 7:

Ein Gemisch aus 83,4 g Phthalsäureanhydrid, 125,2 g Harnstoff, 16,3 g Kupfer-(I)-chlorid und 0,5 g Ammoniummolybdat wird in einen cylindrischen Reaktionskessel enthaltend 6000 g trockenes, granulares, vorgebildetes rohes Kupferphthalocyanin zugegeben. Die Zugabe erfolgt in Mengen von 106 g pro Stunde. Die Temperatur der Reaktionsmischung wird auf 175°C gehalten und der Reaktionskessel wird mit einer Geschwindigkeit von 6 U/Min. rotiert. Durch Stickstoffeinleitung wird im wesentlichen sauerstofffrei gearbeitet.

Das Rohprodukt wird als trockenes, granulares Material ausgetragen, durch Rühren in 10%ige wässrige Salzsäure bei 95°C gereinigt, abfiltriert, gewaschen und getrocknet.

93,2 g des obenerwähnten trockenen und gereinigten Kupferphthalocyanins werden in einer Kugelmühle mit 6,8 g Natriumformat vermahlen, bis die Kristallmodifikationsumeinen α-Gehalt von 50-60 % erreicht hat.

225 g auf 50°C erwärmtes Wasser, 22,5 g 50%ige Kalilauge, 10 g hydriertes Kolophonium und 18,6 g N,N′-Diethylanilin werden mit einem Schnellrührer zu einer Emulsion gerührt.

100 g des wie oben beschrieben vermahlenen Kupferphthalocyanins und 300 g auf 50°C erwärmtes Wasser werden der Emulsion zugegeben. Die erhaltene Mischung wird 2 Stunden im Schnellrührer mit 3000 U/min. gerührt. Dann wird eine Lösung aus 5 g Calciumchlorid in 75 g Wasser zugegeben und die Aufschlämmung wird weitere 25 Minuten mit 3000 U/min. gerührt. Danach wird eine Aufschlämmung von 2,8 g Dimethylaminokupferphthalocyanin in 70 g Wasser zugegeben und nochmals 5 Minuten mit 3000 U/Min gerührt. Schliesslich werden 55 g 36%ige Salzsäwe zugegeben, die angesäuerte Aufschlärnmung wird filtriert, der ß-Kupferphthalocyaninpigment-Filterkuchen wird mit Wasser säure- und chloridionenfrei gewaschen und bei 80°C getrocknet.

Das so erhaltene Pigment wird in einem Phenolharz/Toluol-Tiefdruckfarbensystem eingearbeitet. Es zeichnet sich durch seine Farbstärke, seinen Glanz und seinen grünen Farbton aus.

## Patentansprüche

1. Verfahren zur Herstellung von ß-Kupferphthalocyanin in Pigmentform durch
a) im wesentlichen kontinuierliches und gleichmässiges Einleiten von Phthalsäureanhydrid oder Phthalimid, Harnstoff, einer Kupferverbindung und einem Katalysator in einen trockenes, granulares, vorgebildetes Kupferphthalocyanin enthaltenden Reaktionskessel und Entfernen des gebildeten rohen Phthalocyanins aus dem Reaktionskessel und
b) Ueberführen des unter a) erhaltenen rohen Kupferphthalocyanins in die Pigmentform durch Mahlung in trockenem Zustand oder in wässrigem Medium, Vermischen des Mahlgutes mit einer wässrigen Emulsion bestehend aus
i) einem flüssigen C₆-C₂₀-Amin, das in Wasser oder Alkali unlöslich, aber in Säure löslich ist und
ii) einem oberflächenaktiven Mittel, mit welchem das flüssige Amin emulgiert werden kann,
Ansäuern des Gemisches, um das Amin zu lösen und Isolieren des erhaltenen Kupferphthalocyanins in Pigmentform aus dem Gemisch.

2. Verfahren gemäss Anspruch 1, dadurch gekennzeichnet, dass Harnstoff und Kupferverbindung im Verhältnis zum Phthalsäureanhydrid oder zum Phthalimid im Ueberschuss eingesetzt werden.

3. Verfahren gemäss Anspruch 1, dadurch gekennzeichnet, dass katalytische Mengen Ammoniummolybdat zugesetzt werden.

4. Verfahren gemäss Anspruch 1, dadurch gekennzeichnet, dass das trockene, granulare, vorgebildete Kupferphthalocyanin bei Temperaturen zwischen 150 und 300°C gehalten wird.

5. Verfahren gemäss Anspruch 1, dadurch gekennzeichnet, dass das trockene, granulare, vorgebildete Kupferphthalocyanin unter ständigem Rühren während der Stufe a) gehalten wird.

6. Verfahren gemäss Anspruch 5, dadurch gekennzeichnet, dass die Stufe a) in einem rotierenden Reaktionskessel durchgeführt wird.

7. Verfahren gemäss Anspruch 1, dadurch gekennzeichnet, dass die Atmosphäre im Reaktionskessel im wesentlichen sauerstofffrei gehalten wird.

8. Verfahren gemäss Anspruch 1, dadurch gekennzeichnet, dass als Kupferverbindung Kupfer-(I)-chlorid eingesetzt wird.

9. Verfahren gemäss Anspruch 1, dadurch gekennzeichnet, dass das Verhältnis zwischen der gesamten Ausgangsproduktemenge und der Menge an vorgebildetem Kupferphthalocyanin im Reaktionskessel während der Reaktionsdauer 0,1 bis 20 Gew.%, bezogen auf die gesamte Menge an vorgebildetem Kupferphthalocyanin beträgt.

10. Verfahren gemäss Anspruch 1, dadurch gekennzeichnet dass das rohe Kupferphthalocyanin nach Beendigung der Stufe a) und vor der Durchführung der Stufe b) gereinigt wird.

11. Verfahren gemäss Anspruch 1, dadurch gekennzeichnet, dass die Mahlung in völliger Abwesenheit eines Mahlhilfsmittels erfolgt.

12. Verfahren gemäss Anspruch 1, dadurch gekennzeichnet, dass die Mahlung in einer Kugel- oder Schwingmühle durchgeführt wird.

13. Verfahren gemäss Anspruch 1, dadurch gekennzeichnet, dass die Mahlung in Gegenwart eines Mahlhilfsmittels zur Förderung der nachfolgenden Aminemulsions-Behandlung erfolgt.

14. Verfahren gemäss Anspruch 13, dadurch gekennzeichnet, das das Mahlhilfsmittel in einer Menge von 5 bis 15 Gew.%, bezogen auf das zu mahlende Pigment, eingesetzt wird.

15. Verfahren gemäss Anspruch 13, dadurch gekennzeichnet, dass das Mahlhilfsmittel Natriumformiat, Phthalimid, Phthalsäureanhydrid, hydriertes Kolophonium oder Glycerolmonooleat ist.

16. Verfahren gemäss Anspruch 1, dadurch gekennzeichnet, dass die Mahlung in wässrigem Medium in einer Perlmühle vorgenommen wird.

17. Verfahren gemäss Anspruch 1, dadurch gekennzeichnet, dass der Mahlprozess beendigt wird, wenn die Umwandlung in die α-Modifikation 20 bis 85 % erreicht hat.

18. Verfahren gemäss Anspruch 16, dadurch gekennzeichnet, dass die wässrige Mahlung in Gegenwart einer Aminemulsion stattfindet oder der wässrigen Mahlung eine Mahlung in einer wässrigen Aminemulsion nachfolgt.

19. Verfahren gemäss Anspruch 1, dadurch gekennzeichnet dass das flüssige Amin ein C₇-C₁₆-Alkylmonoamin, ein Diamin der Formel RHN-(CH)₃-NH₂, worin R einen aliphatischen C₁₂-C₁₆-Rest bedeutet, Anilin oder C₁-C₄-Alkyl-substituiertes Anilin ist.

20. Verfahren gemäss Anspruch 1, dadurch gekennzeichnet, dass das Amin in einer Menge zwischen 5 und 30 Gew.%, bezogen auf das Pigment, eingesetzt wird.

21. Verfahren gemäss Anspruch 1, dadurch gekennzeichnet dass das oberflächenaktive Mittel ein anionisches oberflächenaktives Mittel ausgewählt aus Alkalimetallsalzen, Alkylbenzolsulfonaten, ungesättigten Tallölharzen, Kolophonium und Kolophoniumderivaten ist.

22. Verfahren gemäss Anspruch 1, dadurch gekennzeichnet, dass das oberflächenaktive Mittel ein nichtionisches Alkylphenol-ethylenoxidkondensat ist.

23. Verfahren gemäss Anspruch 1, dadurch gekennzeichnet, dass das oberflächenaktive Mittel in einer Menge von 1 bis 15 Gew.%, bezogen auf das Pigment, eingesetzt wird.

24. Verfahren gemäss Anspruch 1, dadurch gekennzeichnet, dass das Vermischen des Mahlgutes mit der Amin/Tensid-Emulsion bei einer Temperatur zwischen 20 und 100°C solange weitergeführt wird, bis das Pigmentmaterial eine durchschnittliche Partikelgrösse unter 1 µm aufweist und im wesentlichen in der β-Modifikation vorliegt.

25. Verfahren gemäss Anspruch 1, dadurch gekennzeichnet, dass die Mischung der Stufe b), nachdem das Pigmentmaterial die erwünschte submikronische Partikelgrösse erreicht hat, durch Zugabe von Mineralsäure bis zu einem pH unter 1,5 angesäuert wird.

26. Verfahren gemäss Anspruch 21, dadurch gekennzeichnet, dass ein Alkalimetallresinat als anionisches oberflächenaktives Mittel verwendet und ein die Lösungsmittel/Tensid-Emulsion brechendes Salz vor dem Ansäuern zugegeben wird.

## Claims

1. A process for producing pigmentary β copper phthalocyanine by
a) charging phthalic anhydride or phthalimide, urea, a copper compound and a catalyst, substantially continuously and uniformly, into a reaction vessel containing dry, granular, preformed copper phthalocyanine and removing the crude phthalocyanine formed from the reaction vessel, and
b) converting the crude copper phthalocyanine produced in a) into pigmentary form, by milling it in the dry state or in an aqueous medium, mixing the milled material with an aqueous emulsion comprising
i) a liquid C₆-C₂₀amine which is insoluble in water or alkali but is soluble in acid, and
ii) a surfactant with which the liquid amine can be emulsified, acidifying the mixture to dissolve the amine; and isolating the resulting pigmentary copper phthalocyanine from the mixture.

2. A process according to claim 1, wherein the urea and copper compound are employed in excess relative to the phthalic anhydride or phthalimide.

3. A process according to claim 1, wherein a catalytic amount of ammonium molybdate is added.

4. A process according to claim 1, wherein the dry, granular, preformed copper phthalocyanine is maintained at a temperature between 150 and 300°C.

5. A process according to claim 1, wherein the dry, granular, preformed copper phthalocyanine is maintained in a constant state of agitation during step a).

6. A process according to claim 5, wherein step a) is carried out in a rotating reaction vessel.

7. A process according to claim 1, wherein an essentially oxygen-free atmosphere is maintained in the reaction vessel.

8. A process according to claim 1, wherein the copper compound is copper(I) chloride.

9. A process according to claim 1, wherein the quantitative proportion of total precursors to preformed copper phthalocyanine in the reaction vessel, during the reaction period, is from 0.1 to 20 % by weight, based on the total quantity of preformed copper phthalocyanine.

10. A process according to claim 1, wherein after completion of step a) and prior to performing step b), the crude copper phthalocyanine is purified.

11. A process according to claim 1, wherein milling is effected in the total absence of a milling aid.

12. A process according to claim 1, wherein milling is performed in a ball mill or vibration mill.

13. A process according to claim 1, wherein milling is effected in the presence of a milling aid for promoting the subsequent amine emulsion treatment.

14. A process according to claim 13, wherein the amount of milling aid employed is from 5 % to 15 % by weight, based on the pigment to be milled.

15. A process according to claim 13, wherein the milling aid is sodium formate, phthalimide, phthalic anhydride, hydrogenated rosin or glycerol monooleate.

16. A process according to claim 1, wherein milling is performed in an aqueous medium in a bead mill.

17. A process according to claim 1, wherein the milling operation is terminated when the degree of conversion into the a modification reaches 20 to 85 %.

18. A process according to claim 16, wherein aqueous milling is effected in the presence of an amine emulsion or aqueous milling is followed by milling in an aqueous amine emulsion.

19. A process according to claim 1, wherein the liquid amine is a C₇-C₁₆-alkylmonoamine; a diamine of formula RHN(CH₂)₃NH₂ in which R is a C₁₂-C₁₆ aliphatic radical; aniline; or a C₁-C₄alkyl-substituted aniline.

20. A process according to claim 1, wherein the amount of amine used is between 5 and 30 % by weight, based on the pigment.

21. A process according to claim 1, wherein the surfactant is an anionic surfactant selected from an alkali metal salt, an alkylbenzenesulfonate, an unsaturated tall oil resin, rosin and a derivative of rosin.

22. A process according to claim 1, wherein the surfactant is a nonionic alkylphenol-ethylene oxide condensate.

23. A process according to claim 1, wherein the amount of surfactant employed is from 1 to 15 % by weight, based on the pigment.

24. A process according to claim 1, wherein mixing of the milled material with the amine/surfactant emulsion is continued at between 20 and 100°C until the pigment material has an average particle size below 1 µm and is substantially in the β modification.

25. A process according to claim 1, wherein after the pigment material has reached the desired submicron particle size the mixture of step b) is acidified by adding mineral acid to a pH of below 1.5.

26. A process according to claim 21, wherein an alkali metal resinate is used as the anionic surfactant and a salt which breaks the solvent/surfactant emulsion is added prior to acidification.

## Revendications

1. Procédé pour préparerla β.phtalocyanine de cuivre sous forme pigmentaire,
a) par introduction, d'une manière essentiellement continue et uniforme, d'anhydride phtalique ou de phtalimide ou d'urée, d'un composé du cuivre et d'un catalyseur, dans un réacteur contenant de la phtalocyanine de cuivre sèche, granulaire, préformée, puis élimination, du réacteur, de la phtalocyanine brute formée, et
b) par conversion en la forme pigmentaire de la phtalocyanine de cuivre brute obtenue en a), par broyage à l'état sec ou en milieu aqueux, mélange du produit broyé avec une émulsion aqueuse constituée
i) d'une amine liquide en C₆-C₂₀, qui est insoluble dans l'eau ou dans les alcali, mais qui est soluble dans un acide, et
ii) d'un agent tensioactif, avec lequel l'amine liquide peut être émulsionnée,
acidification du mélange pour dissoudre l'amine et isolement, à partir du mélange, et sous forme pigmentaire, de la phtalocyanine de cuivre ainsi obtenue.

2. Procédé selon la revendication 1, caractérisé en ce qu'on utilise l'urée et le composé du cuivre en excès par rapport à l'anhydride phtalique ou au phtalimide.

3. Procédé selon la revendication 1, caractérisé en ce qu'on ajoute des quantités catalytiques de molybdate d'ammonium.

4. Procédé selon la revendication 1, caractérisé en ce que la phtalocyanine de cuivre préformée, granulaire, sèche, est maintenue à des températures comprises entre 150 et 300°C.

5. Procédé selon la revendication 1, caractérisé en ce que la phtalocyanine de cuivre préformée, granulaire, sèche, est maintenue sous agitation permanente pendant l'étape a).

6. Procédé selon la revendication 5, caractérisé en ce que l'étape a) est mise en oeuvre dans un réacteur tournant.

7. Procédé selon la revendication 1, caractérisé en ce que l'atmosphère dans le réacteur est maintenue essentiellement exempte d'oxygène.

8. Procédé selon la revendication 1, caractérisé en ce qu'on utilise comme composé du cuivre du chlorure de cuivre(I).

9. Procédé selon la revendication 1, caractérisé en ce que le rapport entre la quantité totale de produit et la quantité de phtalocyanine de cuivre préformée dans le réacteur pendant la durée de la réaction est de 0,1 à 20 % en poids par rapport à la quantité totale de phtalocyanine de cuivre préformée.

10. Procédé selon la revendication 1, caractérisé en ce que la phtalocyanine de cuivre brute est purifiée après la fin de l'étape a) et avant mise en oeuvre de l'étape b).

11. Procédé selon la revendication 1, caractérisé en ce que le broyage s'effectue en l'absence totale d'un auxiliaire de broyage.

12. Procédé selon la revendication 1, caractérisé en ce que le broyage est réalisé dans un broyeur à billes ou un broyeur oscillant.

13. Procédé selon la revendication 1, caractérisé en ce que le broyage est effectué en présence d'un auxiliaire de broyage, pour faciliter le traitement, après-coup, de l'émulsion de l'amine.

14. Procédé selon la revendication 13, caractérisé en ce que l'auxiliaire de broyage est utilisé en une quantité de 5 à 15 % en poids par rapport au pigment à broyer.

15. Procédé selon la revendication 13, caractérisé en ce que l'auxiliaire de broyage est le formiate de sodium, le phtalimide, l'anhydride phtalique, la colophane hydrogénée ou le monooléate de glycérol.

16. Procédé selon la revendication 1, caractérisé en ce que le broyage est réalisé en milieu aqueux dans un broyeur à billes.

17. Procédé selon la revendication 1, caractérisé en ce que l'opération de broyage est terminée quand la conversion en la forme α a atteint 20 à 85 %.

18. Procédé selon la revendication 16, caractérisé en ce que le broyage en milieu aqueux est effectué en présence d'une émulsion d'une amine, ou encore le broyage en milieu aqueux est suivi d'un broyage dans une émulsion aqueuse d'une amine.

19. Procédé selon la revendication 1, caractérisé en ce que l'amine liquide est une alkylmonoamine en C₇-C₁₆, une diamine de formule RHN-(CH)₃-NH₂, où R est un radical aliphatique en C₁₂-C₁₆, l'aniline, ou une aniline à substitution alkyle en C₁-C₄.

20. Procédé selon la revendication 1, caractérisé en ce que l'amine est utilisée en une quantité de 5 à 30 % en poids par rapport au pigment

21. Procédé selon la revendication 1, caractérisé en ce que l'agent tensioactif est un agent tensioactif anionique choisi parmi les sels de métaux alcalins, les alkylbenzènesulfonates, les résines de tall-oil insaturé, la colophane et les dérivés de la colophane.

22. Procédé selon la revendication 1, caractérisé en ce que l'agent tensioactif est un produit de condensation non ionique d'un alkylphénol et de l'oxyde d'éthylène.

23. Procédé selon la revendication 1, caractérisé en ce que l'agent tensioactif est utilisé en une quantité de 1 à 15 % en poids par rapport au pigment.

24. Procédé selon la revendication 1, caractérisé en ce que le mélange du produit broyé et de l'émulsion de l'amine/tensioactif est poursuivi, à une température comprise entre 20 et 100°C, jusqu'à ce que le matériau pigmentaire ait une granulométrie moyenne inférieure à 1 µm et se présente essentiellement sous sa forme β.

25. Procédé selon la revendication 1, caractérisé en ce que le mélange de l'étape b), après que le matériau pigmentaire a atteint la granulométrie submicronique souhaitée, est acidifié jusqu'à un pH inférieur à 1,5 par addition d'un acide minéral.

26. Procédé selon la revendication 21, caractérisé en ce qu'on utilise un résinate d'un métal alcalin comme agent tensioactif anionique, et que l'on ajoute, avant acidification, un sel qui rompt l'émulsion du solvant/ tensioactif.
